# EUROPEAN PATENT APPLICATION

(11) **EP 2 330 333 A1**
(43) Date of publication of application: **08.06.2011**
(21) Application number: 10014672.9
(22) Date of filing: 16.11.2010
(51) Int. Cl.: F16M 11/14, G03B 17/54, H04N 1/195

(54) **Electronic device stand and image display system**

(30) Priority: 20.11.2009 JP 2009265192
(71) Applicant: Sanyo Electric Co., Ltd., Osaka 570-8677 (JP)
(72) Inventor: Kotani, Kazunori, Moriguchi-shi Osaka 570-8677 (JP)
(74) Representative: Glawe, Delfs, Moll

(57) **Abstract**

An electronic device stand includes a fastening member (2) fastenable to an installation plane. An elongated member (3) is connected to the fastening member. A mount member (4) is connected by the elongated member (3) to the fastening member (2). The mount member (4) includes mechanical mounting structures configured to mount plural types of electronic devices (7, 8, 9).

## Description

This application is based upon and claims the benefit of priority from prior Japanese Patent Application No. 2009-265192, filed on November 20, 2009, the entire contents of which are incorporated herein by reference.

The present invention relates to an electronic device stand for supporting an electronic device and an image display system.

A stand is normally used to support an electronic device at a desired height from an installation plane. Japanese Laid-Open Patent Publication No. 8-163476 discloses a stand that supports a video projector. The stand includes a movable arm, which can support an LCD projector unit at any angle, and a fastener, which pivotally fastens the movable arm to an edge of a table.

Japanese Laid-Open Patent Publication No. 8-181893 discloses a stand that supports an imaging device. The stand includes a support base and a telescopic support arm, which is pivotally coupled to the support base.

When displaying an image captured by the imaging device with a video projector, the imaging device and the video projector must be supported by different stands. Thus, the installation plane must provide a large space for the arrangement of the stands.

One aspect of the present invention is an electronic device stand including a fastening member fastenable to an installation plane. An elongated member is connected to the fastening member. A mount member is connected by the elongated member to the fastening member. The mount member includes mechanical mounting structures configured to mount plural types of electronic devices.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a perspective view showing an electronic device stand according to a first embodiment of the present invention;
Fig. 2 is a block diagram showing electric circuits of the electronic device shown in Fig. 1;
Fig. 3 is a perspective view showing an electronic device stand according to a second embodiment of the present invention; and
Fig. 4 is a block diagram showing electric circuits of the electronic device shown in Fig. 3.

### First Embodiment

A first embodiment of the present invention will now be discussed with reference to the drawings. The drawings schematically show only elements required for describing an electronic device stand and an image display system using the electronic device stand.

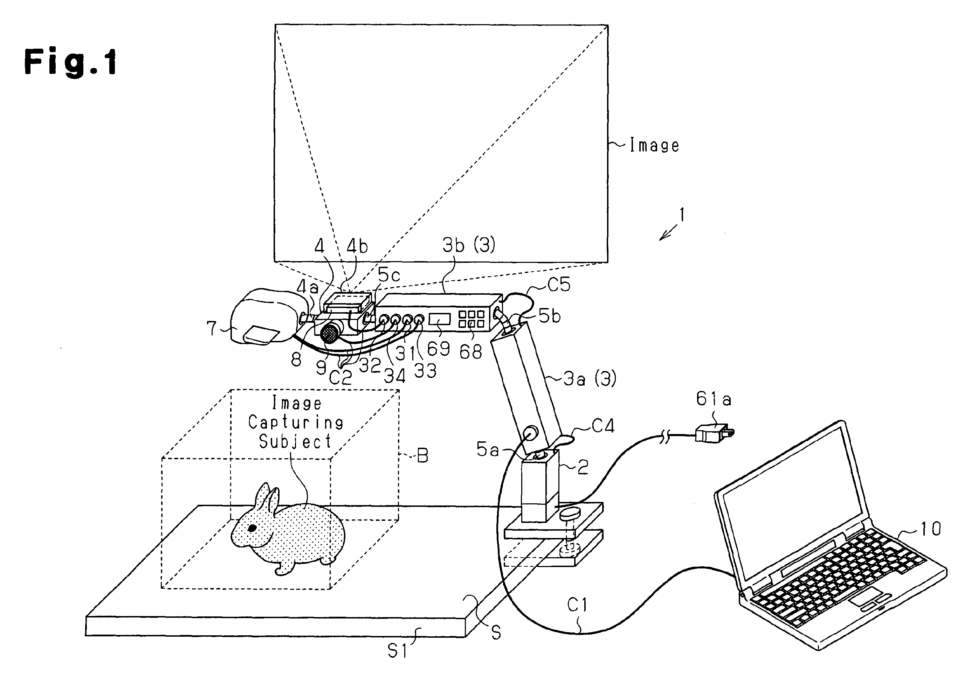

Referring to Fig. 1, an electronic device stand 1 supports electronic devices 7, 8, and 9 at a predetermined height from an installation plane S and includes a base 2, an arm 3, and a head 4.

The base 2 is a fastening member, which is fastened to the installation plane S. In the present embodiment, the base 2 has a clamping structure that clamps a plate S1, which defines the installation surface S. The base 2 clamps an edge of the plate S1 so that the base 2 is fastened to the installation plane S in a removable manner. A joint 5a, which serves as a coupling member, couples the base 2 to the arm 3.

The arm 3 is an elongated member extending from the base 2 to support the head 4 at the desired position. In the present embodiment, the arm 3 includes a plurality of arm members. More specifically, the arm 3 includes a first arm member 3a and a second arm member 3b. The first arm member 3a is mechanically coupled by the joint 5a to the base 2. The second arm member 3b is mechanically coupled by a joint 5b, which serves as a coupling member, to the first arm member 3a. Further, the arm 3 is connected by a joint 5c, which serves as a coupling member, to the head 4. In the present embodiment, the second arm member 3b is mechanically coupled by the joint 5c to the head 4. That is, the first arm member 3a has a basal end coupled to the base 2 and a distal end coupled to the second arm member 3b. The second arm member 3b has a distal end connected to the head 4.

The head 4 serves as a mount member having mechanical mounting structures used to mount various types of electronic devices. The head 4 is coupled to the base 2 by the arm 3. In the present embodiment, the various types of electronic devices include an imaging device 7, a video projector 8, and an audio output device 9. The head 4 includes a screw 4a, a holder 4b, and a threaded hole. The screw 4a may be a quarter-inch screw mated with a threaded hole that is normally formed in the imaging device 7. The holder 4b is formed to hold the video projector 8, which is of a compact type. The holder 4b may be fastened to the head 4. A fastening means, such as a screw, fastens the holder 4b to the head 4. The audio output device 9 is fastened by a screw to the threaded hole. As described above, the head 4 includes a plurality of mechanical mounting structures for the mounting of the electronic devices, such as the screw 4a, the holder 4b, and the threaded hole.

The base 2, the arm 3, and the head 4 are coupled to one another in this order to form the stand 1. With the stand 1, the posture (shape) of the arm 3 relative to the base 2 is changeable. More specifically, in a state in which force of a predetermined amount or greater does not act on the joint 5a, which couples the base 2 and the first arm member 3a, the arm 3 remains in an adjusted shaped. When force of the predetermined amount or greater acts on the joint 5a, the arm 3 bends. By bending the joint 5a, the angle of the first arm member 3a changes relative to the base 2. In this manner, by changing the angle of the first arm member 3a relative to the base 2, the posture of the first arm member 3a may be changed so that the position of the head 4 relative to the base 2 is changeable.

In the preferred embodiment, the joint 5b, which couples the first arm member 3a and the second arm member 3b, is formed in the same manner as the joint 5a. Thus, the bending of the joint 5b changes the direction in which the second arm member 3b extends relative to the first arm member 3a. In this manner, by changing the angle of the second arm member 3b, the posture of the second arm member 3b may be changed so that the position of the head 4 is changeable with further freedom.

In the preferred embodiment, the joint 5c, which couples the second arm member 3b and the head 4, is formed in the same manner as the joints 5a and 5b. Thus, the bending of the joint 5c changes the direction in which the head 4 extends relative to the second arm member 3b. In this manner, the posture of the head 4 may be changed, and the position of the head 4 is changeable with even more freedom.

In the present embodiment, the joint 5a is removable from the base 2 and the first arm member 3a. The joint 5c is also removable from the second arm member 3b and the head 4. Thus, the base 2 and the first arm member 3a are separable or disconnectable from each other. Further, the second arm member 3b and the head 4 are separable or disconnectable from each other. The joint 5b is also removable from the first arm member 3a and the second arm member 3b. Thus, the first arm member 3a and the second arm member 3b are separable or disconnectable from each other.

In the mechanical structures of the stand 1, the joints 5a, 5b, and 5c, which function as an angle adjustment mechanism, allow for the position and posture of the head 4 to be adjusted in an optimal manner. Further, parts such as the arm 3 and the head 4 are replaceable.

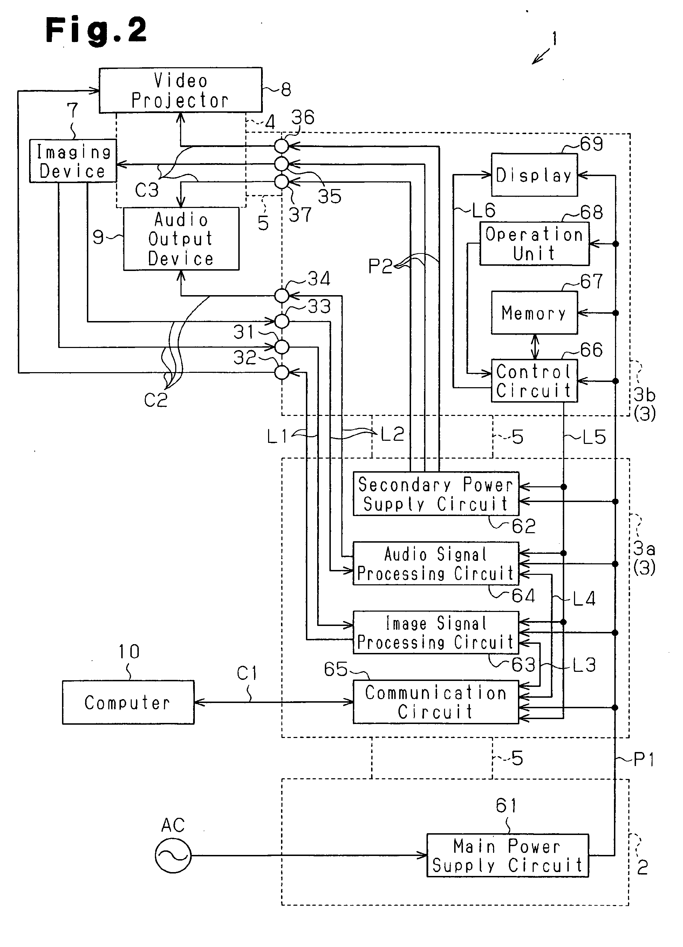

Electric circuits included in the stand 1 will now be discussed with reference to Fig. 2.

As shown in Fig. 2, the stand 1 includes electric circuits arranged in the base 2 and/or the arm 3. The electric circuits include a main power supply circuit 61, a secondary power supply circuit 62, an image signal processing circuit 63, an audio signal processing circuit 64, a communication circuit 65, a control circuit 66, a memory 67, an operation unit 68, and a display 69.

The main power supply circuit 61 receives AC power from a commercial AC power source via a plug 61 a (refer to Fig. 1) and supplies predetermined power to the various circuits in the stand 1. The main power supply circuit 61 uses a power line P1 to supply the circuits such as the secondary power supply circuit 62, image signal processing circuit 63, audio signal processing circuit 64, and control circuit 66 with DC power of the required level. In the present embodiment, the main power supply circuit 61 is arranged on the base 2.

The secondary power supply circuit 62 transforms the power supplied from the main power supply circuit to power that is in accordance with each electronic device mounted on the head 4 and supplies the transformed power to the corresponding electronic device. For example, the second arm member 3b includes a plurality of power output terminals 35, 36, and 37 (refer to Fig. 2), which are connected by power lines P2 to the secondary power supply circuit 62. The secondary power supply circuit 62 transforms power so that the power output terminals 35, 36, and 37 each output power of a different level based on the operation of the operation unit 68. In this manner, the power generated by the secondary power supply circuit 62 is variable. Thus, the stand 1 has a power supplying function for supplying each electronic device mounted on the head 4 with the optimal power. In the present embodiment, the secondary power supply circuit 62 is arranged on the first arm member 3a.

The image signal processing circuit 63 is an integrated circuit that performs various types of image signal processes as required on image signals input to the stand 1. Such processes include amplification, bifurcation, A-D conversion, D-A conversion, and scanning conversion. More specifically, for example, the second arm member 3b of the stand 1 includes an image signal input terminal 31, which receives image signals, and an image signal output terminal 32, which outputs image signals. The terminals 31 and 32 are connected by signal lines L1 to the image signal processing circuit 63. The image signal processing circuit 63 performs image signal processing on an image signal input to the image signal input terminal 31 of the stand 1. Then, the image signal processing circuit 63 outputs the image signal that has undergone the image signal processing from the image signal output terminal 32. Accordingly, the stand 1 has an image signal processing function for performing image signal processing on an image signal input to the stand 1. Further, in the present embodiment, the image signal processing circuit 63 is connected by a signal line L3 to the communication circuit 65 to output the image signal to an external device from the communication circuit 65. In the present embodiment, the image signal processing circuit 63 is arranged on the first arm member 3a.

The audio signal processing circuit 64 is an integrated circuit that performs various types of audio signal processes as required on audio signals input to the stand 1. Such processes include amplification, bifurcation, A-D conversion, and D-A conversion. More specifically, for example, the second arm member 3b of the stand 1 includes an audio signal input terminal 33, which receives audio signals, and an audio signal output terminal 34, which outputs audio signals. The terminals 33 and 34 are connected by signal lines L2 to the audio signal processing circuit 64. The audio signal processing circuit 64 performs audio signal processing on an audio signal input to the audio signal input terminal 33 of the stand 1. Then, the audio signal processing circuit 64 outputs an audio signal that has undergone the audio signal processing from the audio signal output terminal 34. Accordingly, the stand 1 has an audio signal processing function for performing audio signal processing on an audio signal input to the stand 1. Further, in the present embodiment, the audio signal processing circuit 64 is connected by a signal line L4 to the communication circuit 65 to output the audio signal to an external device from the communication circuit 65. In the present embodiment, the audio signal processing circuit 64 is arranged on the first arm member 3a.

The communication circuit 65 communicates through wired communication or wireless communication with an external device, which is separated from the head 4 of the stand 1. For example, the communication circuit 65 may be formed by a connector in compliance with the RS-232C standard, a local area network (LAN) terminal, a universal serial bus (USB) connector, a wireless LAN module, or the like. The communication circuit 65 is connected by the signal lines L3 and L4 to the image signal processing circuit 63 and the audio signal processing circuit 64. The communication circuit 65 is formed so as to allow for the image signal processing circuit 63 to output an image signal to the external device and to allow for the audio signal processing circuit 64 to output an audio signal to the external device. Accordingly, the communication circuit 65 provides a communication function for communicating with an external device that is separated from the head 4. The communication circuit 65 may also be formed to allow for the external device to control the image signal processing circuit 63 and the audio signal processing circuit 64. The communication circuit 65 may be wire-connected by a cable C1 to a computer 10, which is an external device. In the present embodiment, the communication circuit 65 is arranged on the first arm member 3a.

The control circuit 66 controls the circuits 62, 63, 64, and 65, which are arranged in the stand 1. The control circuit 66 may be an integrated circuit. The control circuit 66 controls various circuits based on program codes stored in the memory 67 and the operation of the operation unit 68 by a user. More specifically, the control circuit 66 is connected by a signal line L5 to the secondary power supply circuit 62, the image signal processing circuit 63, and the audio signal processing circuit 64, and the communication circuit 65. The control circuit 66 controls these circuits so that they become active when a selection is made for a corresponding one of the function for supplying power to an external device, the signal processing function, and the function for communicating with an external device. Further, the control circuit 66 is connected by a signal line L6 to the display 69 to control the display and change the information shown on the display 69. In the present embodiment, the control circuit 66 is arranged on the second arm member 3b.

The memory 67 is a readable and writable memory such as a non-volatile memory. The memory 67 stores program codes corresponding to the functions of the stand 1. Further, the memory 67 stores setting information, which the user sets by operating the operation unit 68. In the present embodiment, the memory 67 is arranged on the second arm member 3b together with the control circuit 66.

The operation unit 68 is operated when the user inputs information to the stand 1. The operation unit 68 may include various keys that are operable (e.g., depressable) by the fingers of a user. For example, the operation unit 68 may include switches used to select or switch the active function of the stand 1 or buttons for operating a menu screen shown on the display 69. Information generated when the user operates the operation unit 68 is transmitted from the operation unit 68 to the control circuit 66. In the present embodiment, the operation unit 68 is arranged on the second arm 3b.

The display 69 may be formed by, for example, light emitting diodes (LEDs) or a liquid crystal display (LCD). The display 69 shows various types of information, such as setting information, which is required to activate the functions of the stand 1, and information, which the user is notified of. Such information is shown by illuminating the LEDs or forming characters and symbols on the LCD. In the present embodiment, the display 69 is arranged on the second arm member 3b.

As described above, the stand 1 has a function for supplying power to various electronic devices mounted on the head 4, a function for processing a signal input to the stand 1, and a function for communicating with an external device separated from the head 4. The user may refer to the information shown on the display 69 to operate the operation unit 68. In accordance with the operation of the operation unit 68 by the user, the control circuit 66 controls the various circuits so as to activate the selected function.

As described above, in the present embodiment, the secondary power supply circuit 62 and the control circuit 66 are arranged on the arm 3, whereas the main power supply circuit 61 is arranged on the base 2. This easily ensures the holding force of the joint 5a and the like. More specifically, the main power supply circuit 61, which supplies each circuit of the stand 1 with power, is relatively heavy in comparison with circuits such as the secondary power supply circuit 62. Thus, if the main power supply circuit 61 were to be arranged on the first arm member 3a, the weight of the main power supply circuit 61 may bend the joint 5a. In this manner, the holding force of the joint 5a for holding the first arm member 3a and the like may become insufficient such that the first arm member 3a cannot be properly supported and fixed. If the rigidity of the joint 5a were to be increased to solve this problem, the cost of the components would increase. Thus, in the present embodiment, the main power supply circuit 61 is arranged on the base 2. With this layout, the joint 5a resists bending more than when the main power supply circuit 61 is arranged on the first arm member 3a or the like. This easily ensures that the joint 5a has the holding force required to hold the first arm member 3a and the like and prevents costs from increasing.

In the present embodiment, only the main power supply circuit 61 is arranged on the base 2. The secondary power supply circuit 62, the control circuit 66, and etc. are arranged on the arm 3. Thus, by spreading or distributing the circuits throughout the stand 1, the base 2 does not have to be enlarged as when the secondary power supply circuit 62 and the like are all arranged on the base 2. In particular, the terminals 31 to 34, which are connected to the image signal processing circuit 63 and audio signal processing circuit 64 that are arranged on the first arm member 3a, are arranged on the second arm member 3b. Thus, in comparison to when these terminals are arranged on the base 2, shorter power cables C2 may be used to connect the electronic devices, which are mounted on the head 4, to the terminals 31 to 34. This results in simple and convenient connection and disconnection of the power cables C3, which connect the stand 1 and the electronic devices.

In the present embodiment, the functional units of the control circuit 66, the memory 67, the operation unit 68, and the display 69 are arranged on a single arm member, i.e., on the second arm member 3b. Thus, the stand 1 may be systematized to facilitate assembling and disassembling. In the present embodiment, the secondary power supply circuit 62, the image signal processing circuit 63, the audio signal processing circuit 64, and the communication circuit 65 are arranged on the first arm member 3a. However, the secondary power supply circuit 62, the image signal processing circuit 63, the audio signal processing circuit 64, and the communication circuit 65 may be arranged on the second arm member 3b.

In the present embodiment, the base 2 and the first arm member 3a are separable or disconnectable from each other. Thus, a cable C4 (refer to Fig. 1), which is formed by the power line P1, may be connected in a removable manner to the base 2 and the first arm member 3a by using a connector (not shown). In the same manner, the first arm member 3a and the second arm member 3b are separable or disconnectable from each other. Thus, a cable C5 (refer to Fig. 1), which is formed by the power lines P1 and P2 and the signal lines L1, L2, and L3, may be connected in a removable manner to the first arm member 3a and the second arm member 3b by using a connector (not shown). The power supply cable C3 is not shown in Fig. 1. It is preferable that bonding clamps (not shown) be arranged on the stand 1 (not shown) to improve the appearance of the cables C2 and C3, which connect the stand 1 and electronic devices, and allow for smooth mounting of the electronic devices.

The electronic devices mounted on the head 4 will now be discussed. In the illustrated example, the imaging device 7, video projector 8, and audio output device 9 are mounted on the head 4. These electronic devices are preferably light in weight. For example, the use of a portable projector or digital moving camera having a weight of less than 200 g is preferable. Such light electronic devices have become increasingly popular over these recent years.

The imaging device 7 may be a relatively small digital camera. In the present embodiment, the imaging device 7 is a video camera (movie camera) that captures moving pictures and includes optical elements and an audio input microphone. The imaging device 7 is connected to the image signal input terminal 31 and audio signal input terminal 33 by cables C2 and to the power output terminal 35 by a cable C3. An electric signal of an image (moving picture) captured by the imaging device 7 is input to the image signal input terminal 31. Further, an electric signal of sound captured by the imaging device 7 is input to the audio signal input terminal 33.

The video projector 8 may be a portable (compact) projector. The video projector 8 is connected to the image signal output terminal 32 by a cable C2 and to the power output terminal 36 by a cable C3. The video projector 8 projects and displays an image based on an image signal provided from the image signal output terminal 32.

The audio output device 9 is a relatively small speaker. The audio output device 9 is connected to the audio signal output terminal 34 by a cable C2 and to the power output terminal 37 by a cable C3. The audio output device 9 outputs sound based on an audio signal provided from the audio signal output terminal 34.

In this manner, in the image display system of the present embodiment, the stand 1 has a signal processing function. Thus, even when the image display system is formed by compact electronic devices of which functions are significantly reduced (i.e., the imaging device 7, video projector 8, and audio output device 9), a separate image signal processing device and audio signal processing device (not shown) are not necessary. Accordingly, plural types of electronic devices may be mounted on the stand 1, and the functions of the stand 1 improve the convenience of the electronic devices and occupy less space.

As described above, in the present embodiment, the stand 1 and the plural types of electronic devices mounted on the stand 1, which includes the imaging device 7, video projector 8, and audio output device 9, form the image display system.

More specifically, the imaging device 7 mounted on the head 4 of the stand 1 images an image capturing subject. Then, the video projector 8, which is mounted on the stand 1, displays an image of the object (image capturing subject) imaged by the imaging device 7. When the image capturing subject is an animal, it is preferable that the animal be surrounded from four sides using a box B or the like, which limits the activity range of the animal. In this manner, even when such a box B surrounds the image capturing subject from four sides, the stand 1 includes an angle adjustment mechanism such as the joint 5a. Thus, the position of the head 4 may be changed so that the imaging device 7 images the image capturing subject from above.

The image display system of the present embodiment further includes an audio output device 9. The imaging device 7 mounted on the head 4 of the stand 1 captures sound, and the audio output device 9 also mounted on the head 4 of the stand 1 outputs the sound captured by the imaging device 7.

The present embodiment has the advantages described below.
(1) The stand 1 includes the base 2, which is fixed to the installation base S, the arm 3 (i.e., the first arm member 3a and second arm member 3b), which is connected to the base 2, and the head 4, which is connected by the arm 3 to the base 2 and has mechanical mounting structures for the mounting of plural types of electronic devices. Accordingly, the stand 1 includes the head 4, which is connected by the arm 3 to the base 2, and plural types of electronic devices (e.g., the video projector 8, the imaging device 7, and the audio output device 9) are mounted on the head 4. The single stand 1 supports the video projector 8, the imaging device 7, and the audio output device 9. Thus, in comparison with when the plural types of electronic devices (i.e., the video projector 8, the imaging device 7, and the audio output device 9) are supported by a plurality of stands (not shown), the stand 1 occupies less space on the installation plane S.
(2) The position of the head 4 relative to the base 2 is changeable by changing the posture (e.g., angle) of the arm 3. Thus, the locations of the electronic devices (i.e., the video projector 8 and the imaging device 7) mounted on the head 4 may be changed without changing the position of the base 2 relative to the installation plane S.
(3) The stand 1 includes the secondary power supply circuit 62, which supplies power to the plural types of electronic devices (i.e., the video projector 8, the imaging device 7, and the audio output device 9). The secondary power supply circuit 62 transforms power in accordance with each of the electronic devices and is capable of supplying the plural types of electronic devices with different levels of power. Accordingly, the video projector 8, the imaging device 7, and the audio output device 9 are not supplied with the same level of power. Further, power is supplied in accordance with each electronic device. Thus, even when the video projector 8, the imaging device 7, and the audio output device 9 require different levels of power to function normally, these electronic devices are each supplied with the required power.
(4) The stand 1 includes the image signal input terminal 31, which receives an image signal, the image signal processing circuit 63, which performs image signal processing on the image signal received by the image signal input terminal 31, and the image signal output terminal 32, which outputs the image signal that has undergone the image signal processing. Thus, even when the video projector 8 arranged on the head 4 does not perform predetermined image signal processing on an image signal, the image signal processing circuit 63 of the stand 1 performs the image signal processing. That is, the stand 1 according to the present invention may be used as a means for substituting for the video projector 8 to perform image signal processing and also as a means for supporting the portable video projector 8 of which functions are significantly limited.
(5) The stand 1 includes the audio signal input terminal 33, which receives an audio signal, the audio signal processing circuit 64, which performs audio signal processing on the audio signal received by the audio signal input terminal 33, and the audio signal output terminal 34, which outputs the audio signal that has undergone the audio signal processing. Thus, even when the audio output device 9 arranged on the head 4 does not perform a predetermined audio signal processing on an audio signal, the audio signal processing circuit 64 of the stand 1 performs the audio signal processing. That is, the stand 1 according to the present invention may be used as a means for substituting for the audio output device 9 to perform audio signal processing and also as a means for supporting the audio output device 9 of which functions are significantly limited.
(6) The base 2 and the first arm member 3a are separable from each other. Thus, the base 2 and the first arm member 3a are replaceable by other parts. Further, other parts (e.g., an additional arm member) may be added between the base 2 and the first arm member 3a.
(7) The second arm member 3b and the head 4 are separable from each other. Thus, the second arm member 3b and the head 4 are replaceable by other parts. Further, other parts (e.g., an additional arm member) may be added between the second arm member 3b and the head 4.
(8) The stand 1 includes the communication circuit 65, which communicably connects an electronic device that is mounted on the head 4 (e.g., the imaging device 7) and an electronic device that is separated from the head 4 (e.g., the computer 10). This allows for the imaging device 7 and the computer 10 to function in cooperation with each other using the stand 1.
(9) The stand 1 includes the control circuit 66, which controls predetermined functions (i.e., the function for supplying power to the electronic devices, the function for processing an input signal, and the function for communicating with an external device), and an operation unit 68, which is operated by a user. In accordance with the operation of the operation unit 68, the control circuit 66 activates a selected function. Thus, the function for supplying power to the electronic devices, the function for processing an input signal, and the function for communicating with an external device may be manually selected and changed by a user.
(10) The stand 1 includes the display 69, which shows information related to predetermined functions (i.e., the function for supplying power to the electronic devices, the function for processing an input signal, and the function for communicating with an external device). This allows for the user to be presented with setting and notification information, such as the voltage supplied to the electronic devices and the state of communication with the external devices.
(11) The head 4 of the stand 1 includes the screw 4a and the holder 4b, which serve as mounting structures configured to mount plural types of electronic devices. For example, the screw 4a is fastened to a threaded hole in the imaging device 7, which is an electronic device, and the holder 4b holds the compact video projector 8, which is an electronic device. This mounts both of the imaging device 7 and the video projector 8 on the head 4.
(12) The image displaying system according to the present invention includes the stand 1 and the video projector 8, which serves as the electronic device. The video projector 8, which is mounted on the head 4 of the stand 1, projects and displays an image. Thus, a large image may be displayed.
(13) The image display system according to the present invention includes the imaging device 7, which serves as an electronic device. The imaging device 7, which is mounted on the head 4 of the stand 1, captures the image of an object. Then, the video projector 8 displays the image of the object captured by the imaging device 7. Thus, the captured object may be displayed as a large object with a simple structure.

### Second Embodiment

A stand 1 according to a second embodiment of the present invention will now be discussed. To avoid redundancy, like or same reference numerals are given to those components that are the same as the corresponding components of the first embodiment. Such components will not be described in detail.

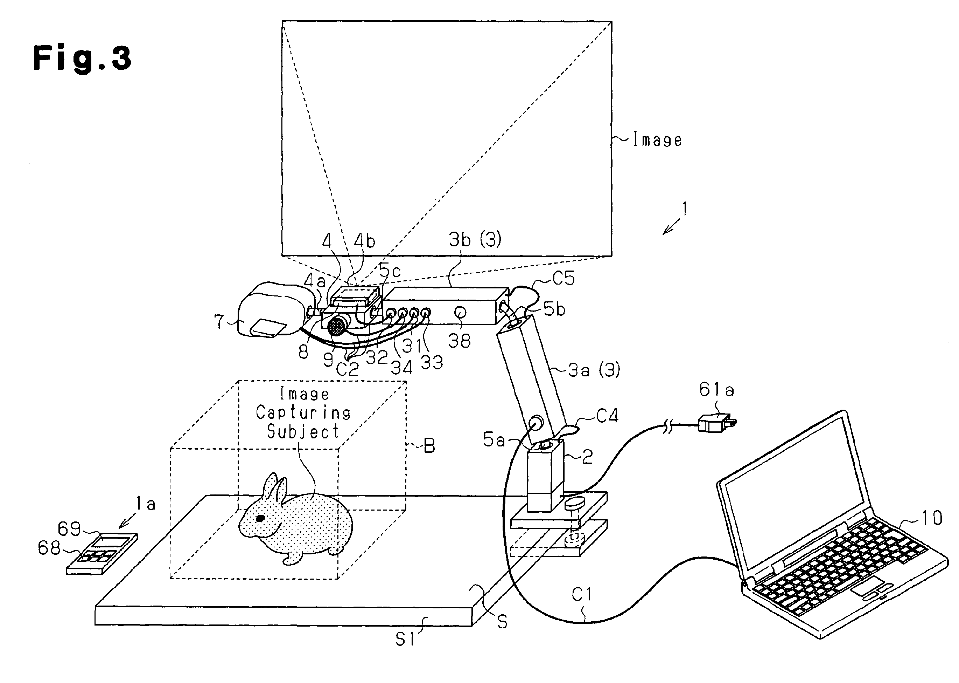

Referring to Fig. 3, in the second embodiment, the stand 1 includes a remote controller 1 a, which is discrete from the stand body (i.e., the base 2, arm 3, and head 4). The operation unit 68 and the display 69 are combined into a single unit and arranged on the remote controller 1 a. The remote controller 1a and the stand 1 are communicable with each other through, for example, infrared remote control signals.

More specifically, the user operates the operation unit 68 while referring to the information shown on the display 69. Based on the operation contents of the operation performed by the user, the remote controller 1a transmits a remote control signal accordingly.

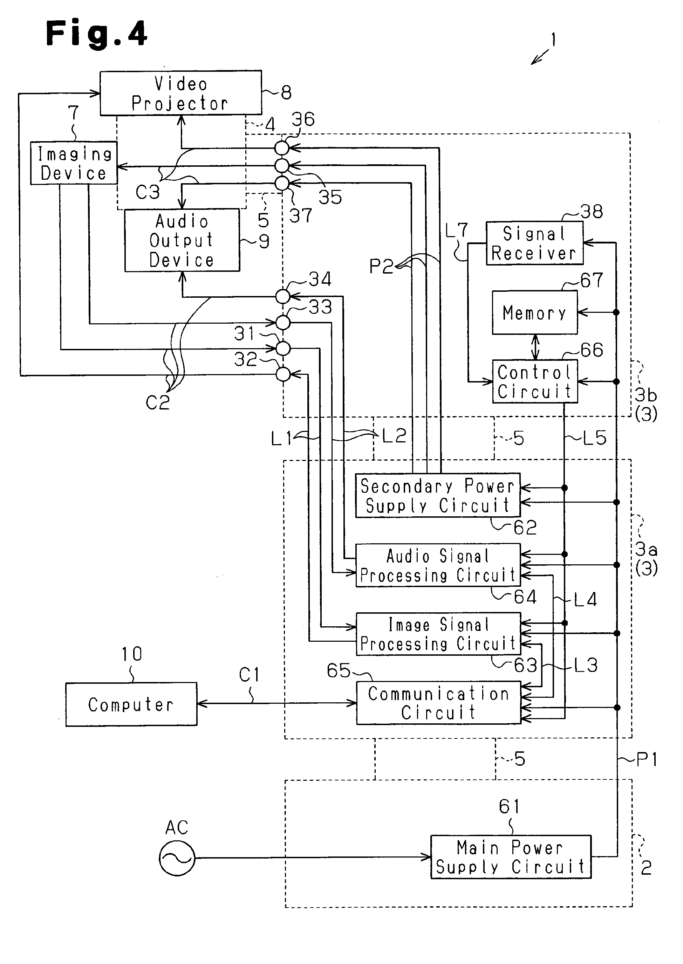

The main power supply circuit 61, the image signal processing circuit 63, and the like are elements arranged on the base 2 and the arm 3. In addition to these elements, the present embodiment additionally includes a signal receiver 38, which receives remote control signals transmitted from the remote controller 1a, as shown in Figs. 3 and 4.

The signal receiver 38, which is a communication means enabling communication with the remote controller 1a, forms a light reception module that receives infrared light in the present embodiment. The signal receiver 38 receives a remote control signal from the remote controller 1a and transmits the received remote control signal to the control circuit 66, which is connected by a signal line L7. The control circuit 66 controls various circuits so that the selected function becomes active in accordance with the remote control signal, which corresponds to the operation the user performed with the operation unit 68.

In addition to advantage (1) and etc. of the first embodiment, the present invention has the advantages described below.
(14) The stand 1 includes the control circuit 66, which controls predetermined functions (i.e., the function for supplying power to the electronic devices, the function for processing an input signal, and the function for communicating with an external device), and a signal receiver 38, which receives a signal from an external unit. Based on the signal received from the signal receiver 38, the control circuit 66 activates a selected function. Thus, the function for supplying power to the electronic devices, the function for processing an input signal, and the function for communicating with an external device may be selected and changed by transmitting a signal from the external unit.

It should be apparent to those skilled in the art that the present invention may be embodied in many other specific forms without departing from the scope of the invention. Particularly, it should be understood that the present invention may be embodied in the following forms.

In the second embodiment, the signal receiver 38 may be formed by a wired communication means, such as a connector, so that wired communication is performed between the remote controller 1a and the signal receiver 38. Such a structure further ensures that the remote control signal transmitted from the remote controller 1a is received by the signal receiver 38 in comparison to the structure in which the remote controller 1a and the signal receiver 38 performs wireless communication with infrared light.

The stand 1 may include the operation unit 68 and the signal receiver 38. In other words, the first and second embodiments may be combined. Such a structure would obtain advantages (9) and (14).

The location of each circuit arranged on the stand 1 may be changed as required. For example, the secondary power supply circuit 62 may be arranged on the base 2. Further, the image signal processing circuit 63 and/or the communication circuit 65 may be arranged on the second arm member 3b. The locations of the terminals 31 to 37 arranged on the stand 1 may also be changed. In addition, the main power supply circuit 61 and the secondary power supply circuit 62 may be combined into a single power supply unit (not shown).

The quantity of arm members is not limited to two. The quantity of arm members may be changed as required. For example, the quantity may be one. Otherwise, the quantity may be three or more.

The arm 3 may be formed to be telescopic. In such a structure, the arm 3 may be extended or retracted to change the posture of the arm. This would obtain advantage (2).

The external device connected to the communication circuit 65 is not limited to the computer 10. Instead, the external device may be a recorder that records image signals and audio signals or a player including a video recording function.

The base 2 is not limited to a clamping structure that clamps the plate S1. For example, in lieu of the clamping structure, the base 2 may include a plurality of supporting legs to support the stand 1.

The mechanical mounting structures of the head 4 for mounting plural types of electronic devices is not limited to the screw 4a and the holder 4b. As long as electronic devices such as the imaging device 7 and the video projector 8 may be mounted, the head 4 may have any mechanical mounting structures.

The electronic devices mounted on the head 4 of the stand 1 are not limited to the imaging device 7, the video projector 8, and the audio output device 9. Electronic devices other than the imaging device 7, the video projector 8, and the audio output device 9 may be mounted on the head 4.

The present examples and embodiments are to be considered as illustrative and not restrictive, and the invention is not to be limited to the details given herein, but may be modified within the scope and equivalence of the appended claims.

## Claims

1. An electronic device stand, including:
a fastening member (2) fastenable to an installation plane;
an elongated member (3) connected to the fastening member; and
a mount member (4) connected by the elongated member to the fastening member,
the stand **characterized in that** the mount member includes mechanical mounting structures configured to mount plural types of electronic devices (7, 8, 9).

2. The electronic device stand according to claim 1, wherein the elongated member has a changeable posture to change the position of the mount member relative to the fastening member.

3. The electronic device stand according to claim 1 or 2, further **characterized by**:
a power supply unit (61, 62) that supplies power to the electronic devices, wherein the power supply unit transforms power in accordance with the electronic devices to supply the electronic devices with different levels of power.

4. The electronic device stand according to any one of claims 1 to 3, further **characterized by**:
an image signal input terminal (31) that receives an image signal;
an image signal processing circuit (63) that performs image signal processing on the image signal received by the image signal input terminal; and
an image signal output terminal (32) that outputs the image signal that has undergone the image signal processing.

5. The electronic device stand according to any one of claims 1 to 4, further **characterized by**:
an audio signal input terminal (33) that receives an audio signal;
an audio signal processing circuit (64) that performs audio signal processing on the audio signal received by the audio signal input terminal; and
an audio signal output terminal (34) that outputs the audio signal that has undergone the audio signal processing.

6. The electronic device stand according to any one of claims 1 to 5, wherein the fastening member and the elongated member are separable from each other.

7. The electronic device stand according to any one of claims 1 to 6, wherein the elongated member and the mount member are separable from each other.

8. The electronic device stand according to any one of claims 1 to 7, further **characterized by**:
a communication circuit (65) communicably connecting the electronic devices mounted on the mount member and an external device (10) that is separated from the mount member.

9. The electronic device stand according to any one of claims 1 to 8, further **characterized by**:
an operation unit (68) operable by a user; and
a control circuit (66) that controls a function of the stand in accordance with the operation performed by a user on the operation unit.

10. The electronic device stand according to any one of claims 1 to 8, further **characterized by**:
a signal receiver (38) that receives an external signal from an external unit; and
a control circuit (66) that controls a function of the stand in accordance with the external signal received by the signal receiver.

11. The electronic device stand according to claim 9 or 10, further **characterized by**:
a display (69) that shows information related to the function of the stand.

12. The electronic device stand according to any one of claims 1 to 11, wherein the mechanical mounting structures include a screw (4a) and a holder (4b).

13. The electronic device stand according to claim 2, wherein the elongated member includes a plurality of arm members (3a, 3b), the electronic device stand further **characterized by**:
a first joint (5a) connecting the fastening member and the elongated member so that at least an angle between the fastening member and the elongated member is changeable;
a second joint (5b) connecting the elongated member and the mount member so that at least an angle between the elongated member and the mount member is changeable; and
a third joint (5c) connecting two adjacent ones of the arm members so that at least an angle between the two arm members is changeable.

14. An image display system comprising:
the electronic device stand according to any one of claims 1 to 13; and
a video projector (8) as one of the plural types of electronic devices, wherein the video projector mounted on the mount member of the electronic device stand projects and displays an image.

15. The image display system according to claim 14, further **characterized by**:
an imaging device (7) as one of the plural types of electronic devices, wherein the imaging device mounted on the mount member images an object, and the video projector displays an image of the object imaged by the imaging device.
